# EUROPEAN PATENT SPECIFICATION

(11) **EP 3 186 844 B1**
(45) Date of publication and mention of the grant of the patent: **10.11.2021**
(21) Application number: 14767072.3
(22) Date of filing: 24.07.2014
(51) Int. Cl.: H01M 4/04, H01M 4/131, H01M 4/485, H01M 10/0525, H01M 4/38, H01M 4/62, C01B 25/163, C01B 25/45, H01M 4/1391, H01M 4/66

(54) **METHODS AND SYSTEMS FOR MAKING AN ELECTRODE FREE FROM A POLYMER BINDER**
VERFAHREN UND SYSTEME ZUR HERSTELLUNG EINER ELEKTRODE OHNE POLYMERBINDER
PROCÉDÉS ET SYSTÈMES DE FABRICATION D'UNE ÉLECTRODE EXEMPTE DE LIANT POLYMÈRE

(43) Date of publication of application: 05.07.2017
(73) Proprietor: Changs Ascending Enterprise Co. Ltd., Taichung (TW); Chang, Chun-Chieh, Ithaca, NY 14850 (US)
(72) Inventor: CHANG, Chun-Chieh, Ithaca, NY 14850 (US); CHANG, Tsun, Yu, Taichung (TW)
(74) Representative: Lau, Sarah Jane
(86) International application number: PCT/IB2014/001065
(87) International publication number: WO 2016/012821

(56) References cited:
- WO-A1-2012/039687
- WO-A1-2013/034821
- JP-A- 2003 272 610
- JP-B2- 5 255 097
- US-A1- 2007 292 759
- US-A1- 2014 186 704
- S. K. MARTHA ET AL: "LiMnPO[sub 4] as an Advanced Cathode Material for Rechargeable Lithium Batteries", JOURNAL OF THE ELECTROCHEMICAL SOCIETY, vol. 156, no. 7, 1 January 2009 (2009-01-01), pages A541-A552, XP055022062, ISSN: 0013-4651, DOI: 10.1149/1.3125765

## Description

### TECHNICAL FIELD

The present disclosure is generally concerned with processing techniques for materials synthesis for lithium ion batteries.

### BACKGROUND

A conventional process of making an electrode, which is a necessary part of secondary batteries, involves a step of applying a polymer binder so as to increase adhesivity between an electrode layer containing the active material and a substrate, where the polymer binder binds the substrate with the active material.

JP2003272610 relates to an electrode plate for a secondary battery made by laminating a collector and an active material layer and having a phosphor-containing layer interposed between the collector and the active material layer.

JP5255097 relates to a composite material for a lithium ion battery electrode, containing a plurality of active material particles for a lithium ion battery electrode, and protective films with which the surface of each active material particle for an electrode is coated.

### BRIEF DESCRIPTION OF THE DRAWINGS

Many aspects of the disclosure can be better understood with reference to the following drawings.
FIG. 1 is a diagram of an exemplary embodiment of a furnace and a heat treatment environment for the synthesis of electrode materials, including binder materials, in accordance with the present disclosure.
FIGS. 2(a)-2(b) are diagrams illustrating examination results for the charge capacity of synthesized electrode materials in accordance with embodiments of the present disclosure.
FIG. 3 is a diagram illustrating electrochemical data resulting from testing of synthesized electrode materials in accordance with embodiments of the present disclosure.

### DETAILED DESCRIPTION

According to a first aspect of the present invention, provided herein is an electrode assembly according to claim 1. According to a second aspect, provided herein is a method of preparing an electrode assembly lithium battery electrode according to claim 4.

According to a third aspect, provided herein is a method of preparing a lithium battery electrode according to claim 8.

Disclosed herein is a technique in making an electrode free from a polymer binder, such as for lithium ion battery applications. In accordance with one embodiment, good material/substrate (according to the present invention) and material's inter particle interfaces can be stabilized (bound) with the utilization of the inorganic binder containing Al, mangnese, and phosphate ions. In certain embodiments according to the present disclosure, and not forming part of the present invention, the transition metal element may be a combination of transition metal elements.

Since an exemplary inorganic binder may provide both bonding and electronic conducting dual characteristics, it is therefore possible to create an electrode for Li-ion batteries without both polymer binder and carbon black that may either decompose at high voltages or create unnecessary porosity (or chances in the loss of contact) of the electrode.

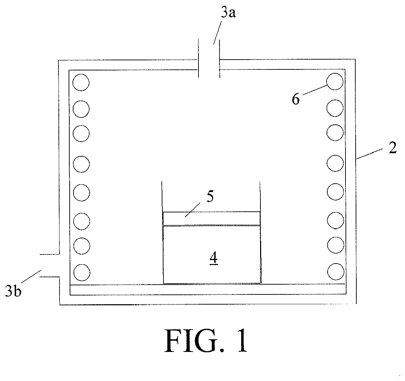

FIG. 1 shows the design of a furnace and a heat treatment environment for the synthesis of the materials presently disclosed. FIG. 1 shows reaction vessel 1, which is open to air in furnace 2. The furnace is open to the atmosphere at 3a and 3b so as to maintain substantially atmospheric pressure in the furnace. Flow of gases into or out of the furnace is dependent on heating and cooling cycles of the furnace and chemical reactions taking place with materials in the furnace. Air is free to enter the furnace, and air and/or products of a chemical reaction of materials 4 in the reaction vessel 1 are free to exit the furnace. Materials 4 in vessel 1 react chemically during heating steps to form cathode materials in accordance with the present disclosure. Materials 4 in vessel 1, which face air found in the furnace, are covered by a layer of a high temperature inert blanket 5, which is porous to air and escaping gases caused by the heating step. Heating coils of the furnace are indicated at 6.

The following are examples of exemplary techniques in accordance with embodiments of the present disclosure.

### EXAMPLES AND COMPARATIVE EXAMPLES

Comparative study of electrodes made with conventional polymer binder and electrodes made using Al-Mn-PO₄ inorganic binder

These examples give a comparison between electrodes made using conventional coating process with the use of polymer binder and electrodes.

### COMPARATIVE EXAMPLE

LiMnPO₄-LiMn₂O₄ (1.8:0.1 in molar ratio) composite material electrodes made using conventional coating process:

For electrode preparation, active material (e.g., 5g), Super P (e.g., 1g) and SBR (e.g., 0.3g) was used in slurry making. After coating using doctor blade, the coated electrode was dried at 110°C for 3 hours followed by punching of the electrode. After vacuum drying again at 110°C for overnight, the electrodes were transferred to the glove box for test cell assembly, where the test cell is a three-electrode design with Li as the reference electrode. The electrode loading was determined to be 6 mg and the active material content was 81.3%. The C-rate used was approximately C/10 (50uA) and the room temperature was approximately 23°C.

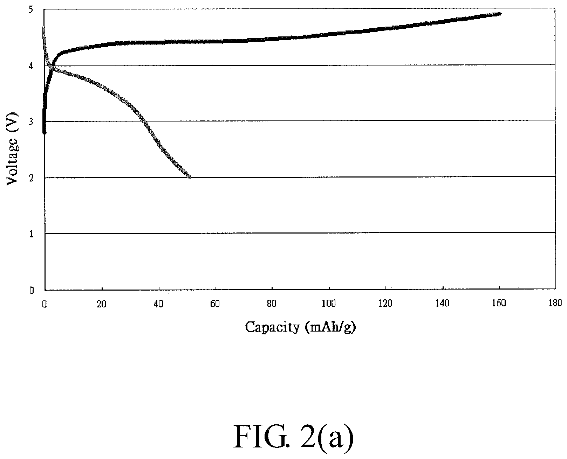

Referring to FIG. 2(a), a charge capacity of 160.5mAh/g and a discharge capacity of 51 mAh/g was obtained for the prepared electrodes, after analysis. Results also indicate that the corresponding Coulomb efficiency was 31.7%. Since the test cell was charged to 4.9V, more or less decomposition of the electrolyte during charging could result in the low Coulomb efficiency.

### EXAMPLE 1 (ACCORDING TO THE PRESENT INVENTION)

LiMnPO₄-LiMn₂O₄ (1.8:0.1 in molar ratio) composite material electrodes made using inorganic binder:

For substrate preparation, the following steps were followed.
1. Al plate (2.67*2.67cm, with one side covered by a polymer film) is used as the initial substrate.
2. Prepare 5M phosphorous acid/n-Butanol solution (23g phosphorous acid diluted by n-Butanol to 40ml in volume) as the etching solution. Warm the solution to 50°C for later use.
3. Soak the Al plate in the 5M phosphorous acid/n-Butanol solution for 2 minutes. Follow by rinsing the Al plate in 100ml n-Butanol for approximately 20 seconds.
4. Dry the Al plate at 60°C in the drying oven (approximately 30 minutes).
Remarks: At this moment, Al-PO₄ thin film is formed as a film in white color.
5. Spread MnO₂ powder through 250 mesh sieve on top of the Al plate. Then, pass the as-made (MnO₂ coated) substrate through the calendaring machine.
6. Heat treat the as-made substrate at 330°C for 2 hours in box furnace. After cooling, the as-made substrate is ready for battery active material loading.
Remarks: At this moment, Al-Mn-PO₄ thin film is formed as a film in brown color. The film is electrical conducting and can be easily examined using the volt meter.

Next, for electrode preparation, the following steps are followed.
1. The above mentioned battery active material is loaded on top of the as-made substrate by spreading the active material powder through 250 mesh sieve.
2. Pass the as-made (active material loaded) electrode through the calendaring machine again for compacting the electrode.
3. Send the as-made electrode to the box furnace and heat treat at 330°C for 4 hours under normal air atmosphere.
4. Punch the heat treated electrode and vacuum dry the samples at 110°C for overnight. The dried electrodes are then transferred to the glove box for test cell assembly.

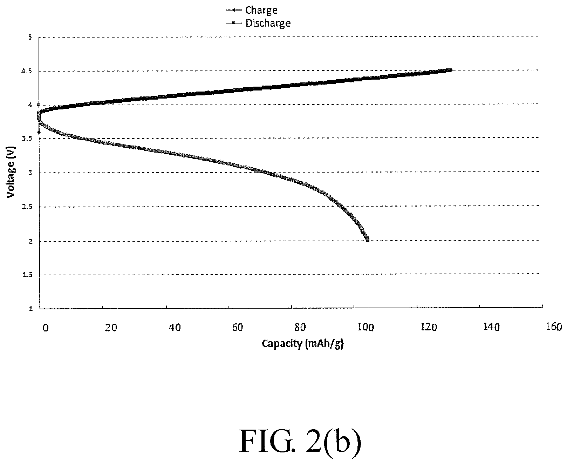

For the test cell, a three-electrode design with Li as the reference electrode was used. The electrode loading (14.6 mg) was calculated by taking the weight difference between the before active materials loading and the after heat treatment stages, then divided by the area of the substrate assuming the coating was even. The electrochemical test result is shown in FIG. 2(b). Accordingly, the C-rate used (220uA) was around C/10 and the room temperature was around 23°C.

Further, from FIG. 2(b), a charge capacity of 131 mAh/g and a discharge capacity of 105mAh/g was obtained. The corresponding Coulomb efficiency was indicated to be 80%. Since the test cell was charged to 4.5V only, the charge capacity is less than the data using normal coating method. However, the increase in Coulomb efficiency may suggest the possible decompositions of electrolyte and polymer binder have been minimized.

In this example, it is clear that the substrate to material interface can be improved with the use of Al-Mn-PO₄ film. If the Al-Mn-PO₄ film is not electrically conducting, the electrochemical behavior should have been deteriorated. Nonetheless, since no polymer binder and carbon black were used in the electrode making process, the decomposition reactions at high voltages have been minimized.

### EXAMPLE 2 (ACCORDING TO THE PRESENT INVENTION)

### Same as-made substrate loaded with LFPO

In this example, the same as-made substrate (Al-Mn-PO₄ thin film coated) was used. The Lithium Iron Phosphorous Oxide (LFPO, US Pat. US7494744, US7585593, US7629084, US7718320) material manufactured by Changs Ascending Co. Ltd. was used as the active material. Again, the material was spread on the substrate by sieving the material through the 250 mesh sieve. Then, calendaring was conducted on the as-made (active material loaded) electrode. After calendaring, the as-made electrode was subjected to heat treatment at 330°C in air for 4 hours.

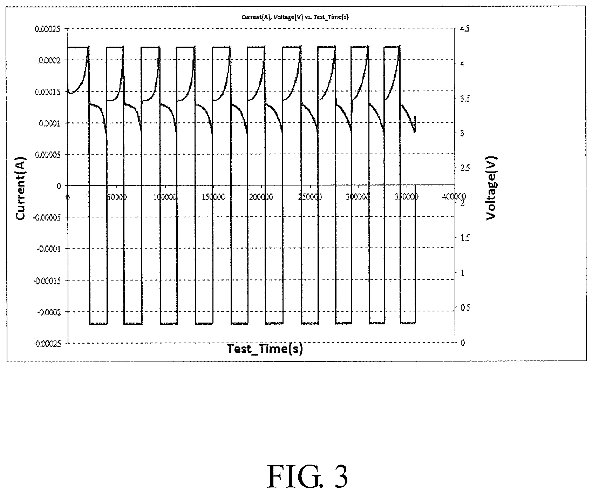

The electrochemical data is shown in FIG. 3. From the figure, it can be seen that the test cell cycled very well although the initial cell voltage was higher than normal during the first charge. It should be mentioned that no polymer binder and carbon black was used in this experiment. This experiment again demonstrates the use of Al-Mn-PO₄ film that allows direct bonding between the materials to the substrate with good electrical conductivity.

It is noteworthy that while spreading the active material on top of the substrate, the substrate can be wetted using either pure water (or other solvents) or very dilute polymer solutions for preventing powder drop off before calendaring. The polymer solutions, for example, can be CMC solution (Carboxylmethyl cellulose, 0.01wt%), or SBR solution (styrene butadiene rubber solution, 0.005wt%) but not limited to these examples. In any case, the solution containing solvent or organic molecules will be vaporized or decomposed during subsequent heat treatment. Besides, calendaring again after heat treatment is exhibiting no harm to the exemplary materials of the present disclosure.

### EXAMPLE 3

### Inter particle bonding using solutions containing Al-Mn-P-O

From previous examples, it was realized that the source of aluminum substrate may not be the only source of Al. Furthermore, the bonding between the material and substrate can be extended to the cases such as bonding between inter particles of the active material. Bonding between active material particles would result in the following benefits: i). Thicker active material films could result in higher volume energy density of the final battery; and ii). More reliable electrical contact between particles would lead to more consistent battery performance and thus better cycle life. A variety of different sources for Aluminum was then explored as potential solutions as discussed below.

### EXAMPLE 3A (ACCORDING TO THE PRESENT INVENTION)

Solution 1: Al source from pure Al foil. In this example, the source of Al was obtained by dissolving Al foil directly in phosphoric acid. In one example, dissolving 22.5g (0.83 mole) Al foil in 230g phosphoric acid (2 mole) resulted in a ratio of AI:P = 5:12. Then, a fraction of the Al-P-O solution was utilized in dissolving manganese formate. Thus, a solution containing AI:Mn:P = 5:7:12 was obtained. This solution has been utilized in making slurries containing the active materials. After coating the slurry on the Al substrate, subsequent heat treatment at 330°C for 2 hours in oxygen or air can result in nice and firm coated film ready for lithium ion battery assembly.

### EXAMPLE 3B (ACCORDING TO THE PRESENT INVENTION)

Solution 2: Al source from Al₂(SO₄)₃. In this example, Al₂(SO₄)₃ (e.g., 2.14g) (0.00625 mole) was dissolved in 15g water. Then, H₃PO₄, 1.44g (0.0125 mole) was added to the solution. Finally, manganese formate Mn(HCOO)₂ (e.g., 0.91g) (0.00625 mole) was dissolved in the solution that resulted in the ratio of AI:Mn:P = 1:1:2. Usually 50g of active material (can be LiMn₂O₄, Li_{1/3}Ni_{1/3}Co_{1/3}MnO₂, LFP or LFPO) is mixed with the as-prepared solution and a slurry, or a paste, or wet powders is formed. A convenient way to make a slurry is by adding proper amount of water that can be coated on Al substrate, then followed by a heat treatment at 330°C for 2 hours in oxygen or air. The electrode loading can be as high as 50mg/cm² with thickness more than 200um without showing any peel off problems.

### EXAMPLE 3C (ACCORDING TO ANOTHER INVENTION)

Solution 3: Formation of AlPO₄. In this example, an AlPO₄ compound was first synthesized. After dissolving AlPO₄ in solvents such as water, the solution was mixed with active material. In such occasion, the transition metal source can be from trace elements in the active material. After heat treatment, still Al-Transition metal element-P-O can be present in the active material or between the active material/substrate interface. Exemplary synthesis routes for AlPO₄ are descried below:
1. Dissolve aluminum formate in phosphoric acid (1:1 in molar ratio). Place the solution in a stainless steel crucible. Bringing the sample to 475°C for 1 hour can result in phase pure AlPO₄.
2. Dissolve aluminum nitrate in phosphoric acid (1:1 in molar ratio). Place the solution in a stainless steel crucible. Bringing the sample to 500°C for 15 minutes can result in phase pure AlPO₄.
3. Disperse aluminum acetate in phosphoric acid (1:1 in molar ratio). In this case, aluminum acetate cannot dissolve in phosphoric acid fully with 1:1 molar ratio. Place the solution in a stainless steel crucible. Bringing the sample to 500°C for 20 minutes can result in a mixture of alumina and AlPO₄.

From Example 3, several conclusions can be made:
1. Al-Mn-P-O solution can be created in any ratio.
2. The Al-Mn-P-O solution can be incorporated in the slurry making stage and is ready for coating. Subsequent heat treatment can result in nice and firm electrode.
3. The Al-Mn-P-O solution can be incorporated in the material that results in the wet powder form. Subsequent heat treatment can bring the material back in the powder form. And, the powder can be processed using conventional coating process utilizing polymer binder and carbon black.
4. In any of the examples shown in Example 3, the inorganic binder consisting of Al-transition metal-P-O resulted in the resultant electrode or materials.

Exemplary embodiments advantageously feature a binding layer formed on Al substrate that binds the substrate with the coated material (see, e.g., example 1 and example 2). Also, exemplary embodiments disclose an extended form of the binding layer. By making a solution containing Al-transition metal elements-P-O, the solution can be used in slurry making (the slurry contains active materials). The slurry can then be coated on Al substrate followed by heat treatment to form a nice and firm electrode. Alternatively, the solution containing Al-transition metal elements-P-O can be mixed with active material powder, after heat treatment, to form new powder particles bound by the binder (see, e.g., example 3), in certain embodiments.

In one embodiment, an exemplary electrode assembly contains an Al substrate, and slurry material coating layer formed on the Al substrate, wherein the slurry material contains active material and Al-transition metal elements-P-O binder material (not forming part of the claimed invention).

## Claims

1. An electrode assembly, comprising:
an Al substrate;
a source of P-O elements; and
a Mn element;
wherein the Al substrate; the source of P-O elements; and the Mn element form a layer of thin film containing Al-Mn-PO₄;
wherein the thin film binds a loaded lithium ion battery active material and the Al substrate;
wherein polymer binder and carbon black are not used in the electrode assembly.

2. The electrode assembly of claim 1, wherein bonding between the thin film and the active material comprises bonding between inter particles of the active material.

3. The electrode assembly of claim 2, wherein the thin film material is directly bonded to the Al substrate.

4. A method of preparing an electrode for lithium ion batteries, comprising:
providing an Aluminum material as an initial substrate;
soaking the Aluminum material in phosphorous acid/n-Butanol solution to form a resulting solution;
after soaking, drying the Aluminum material;
coating the thin film covered Aluminum source material with MnO₂, wherein a thin film containing Al-Mn-PO₄ is formed on the Aluminum material;
heating the MnO₂ coated Aluminum material to form an as-made substrate for battery active material loading;
loading active material on a top of the as-made substrate to form an electrode;
compacting the electrode;
performing a heat treatment on the compacted electrode; and
drying the heated electrodes,
wherein polymer binder and carbon black are not used in the method of preparing the electrode for lithium ion batteries.

5. The method of claim 4, wherein the compacted electrode is heated for at least 4 hours at 330°C in air.

6. The method of claim 4, wherein the heated electrodes are dried at 110°C.

7. The method of claim 4, wherein during loading of the active material, the as-made substrate is wetted to prevent drop-off of the active material.

8. A method for preparing a lithium battery electrode comprising:
dissolving Al foil in a solution comprising a source of P-O elements;
adding a Manganese element to the solution to form a resulting solution containing Al-Mn-P-O
forming a slurry by adding active materials to the resulting solution;
coating the slurry on an Al substrate; and
performing a heat treatment on the coated Al substrate, wherein the active materials bind with the Al substrate,
wherein polymer binder and carbon black are not used in processing the Al substrate.

## Patentansprüche

1. Elektrodenanordnung, umfassend:
ein Al-Substrat;
eine Quelle von P-O-Elementen und ein Mn-Element;
wobei das Al-Substrat, die Quelle der P-O-Elemente und
das Mn-Element eine Dünnschicht bilden, die Al-Mn-PO₄ enthält;
wobei die Dünnschicht ein geladenes aktives Material der Lithium-Ionen-Batterie und das Al-Substrat miteinander verbindet;
wobei in der Elektrodenanordnung kein Polymerbinder und kein Kohlenstoffruß verwendet werden.

2. Elektrodenanordnung nach Anspruch 1, wobei das Verbinden der Dünnschicht mit dem aktiven Material das Verbinden von Zwischenpartikeln des aktiven Materials miteinander umfasst.

3. Elektrodenanordnung nach Anspruch 2, wobei das Dünnschichtmaterial direkt mit dem Al-Substrat verbunden ist.

4. Verfahren zum Herstellen einer Elektrode für Lithium-Ionen-Batterien, umfassend:
Bereitstellen eines Aluminiummaterials als Ausgangssubstrat;
Eintauchen des Aluminiummaterials in eine Phosphorsäure/n-Butanol-Lösung, um eine Lösung zu erhalten;
nach dem Eintauchen, Trocknen des Aluminiummaterials;
Beschichten des mit der Dünnschicht bedeckten Aluminiumausgangsmaterials mit MnO₂, wobei eine Dünnschicht, die Al-Mn-PO₄ enthält, auf dem Aluminiummaterial gebildet wird;
Erhitzen des mit MnO₂ beschichteten Aluminiummaterials, um ein fertiges Substrat für das Laden des aktiven Materials der Batterie zu erhalten;
Laden von aktivem Material auf die Oberseite des fertigen Substrats zum Bilden einer Elektrode;
Verdichten der Elektrode;
Durchführen einer Wärmebehandlung an der verdichteten Elektrode; und
Trocknen der erhitzten Elektroden,
wobei bei dem Verfahren zum Herstellen der Elektrode für Lithium-Ionen-Batterien kein Polymerbinder und kein Kohlenstoffruß verwendet werden.

5. Verfahren nach Anspruch 4, bei dem die verdichtete Elektrode mindestens 4 Stunden lang bei 330 °C an Luft erhitzt wird.

6. Verfahren nach Anspruch 4, wobei die erhitzten Elektroden bei 110 °C getrocknet werden.

7. Verfahren nach Anspruch 4, wobei während des Ladens des aktiven Materials das fertige Substrat benetzt wird, um ein Abfallen des aktiven Materials zu verhindern.

8. Verfahren zum Herstellen einer Lithiumbatterie-Elektrode, umfassend:
Auflösen von Al-Folie in einer Lösung, die eine Quelle von P-O-Elementen enthält;
Zugabe eines Manganelements zu der Lösung, um eine Al-Mn-P-O-haltige Lösung zu erhalten;
Bilden einer Aufschlämmung durch Zugabe aktiver Materialien zu der resultierenden Lösung;
Beschichten eines Al-Substrats mit der Aufschlämmung; und Durchführen einer Wärmebehandlung an dem beschichteten Al-Substrat, wobei sich die aktiven Materialien mit dem Al-Substrat verbinden,
wobei bei dem Verarbeiten des Al-Substrats kein Polymerbinder und kein Kohlenstoffruß verwendet werden.

## Revendications

1. Ensemble électrode, comprenant :
un substrat d'Al ;
une source d'éléments P-O ; et
du Mn élémentaire ;
le substrat d'Al, la source d'éléments P-O et le Mn élémentaire formant une couche de film mince contenant Al-Mn-PO₄ ;
le film mince se liant à un matériau actif de batterie aux ions lithium chargé et au substrat d'Al ;
un liant polymère et du noir de carbone n'étant pas utilisés dans l'ensemble électrode.

2. Ensemble électrode de la revendication 1, dans lequel la liaison entre le film mince et le matériau actif comprend une liaison entre particules du matériau actif.

3. Ensemble électrode de la revendication 2, dans lequel le matériau du film mince est directement lié au substrat d'Al.

4. Procédé de préparation d'une électrode pour batteries aux ions lithium, comprenant :
l'obtention d'un matériau d'aluminium servant de substrat initial ;
l'immersion du matériau d'aluminium dans une solution d'acide phosphoreux/n-butanol pour former une solution résultante ;
après immersion, le séchage du matériau d'aluminium ;
le revêtement du matériau source d'aluminium revêtu d'un film mince avec du MnO₂, un film mince contenant Al-Mn-PO₄ étant formé sur le matériau d'aluminium ;
le chauffage du matériau d'aluminium revêtu de MnO₂ pour former un substrat brut de fabrication pour le chargement d'un matériau actif de batterie ;
le chargement d'un matériau actif au-dessus du substrat brut de fabrication pour former une électrode ;
le compactage de l'électrode ;
la réalisation d'un traitement thermique sur l'électrode compactée ; et
le séchage des électrodes chauffées,
un liant polymère et du noir de carbone n'étant pas utilisés dans le procédé de préparation de l'électrode pour batteries aux ions lithium.

5. Procédé de la revendication 4, dans lequel l'électrode compactée est chauffée pendant au moins 4 heures à 330 °C dans l'air.

6. Procédé de la revendication 4, dans lequel les électrodes chauffées sont séchées à 110 °C.

7. Procédé de la revendication 4 dans lequel, pendant le chargement du matériau actif, le substrat brut de fabrication est mouillé pour empêcher la chute du matériau actif.

8. Procédé de préparation d'une électrode de batterie au lithium comprenant :
la dissolution d'une feuille d'Al dans une solution comprenant une source d'éléments P-O ;
l'ajout de manganèse élémentaire à la solution pour former une solution résultante contenant Al-Mn-P-O ;
la formation d'une suspension par ajout de matériaux actifs à la solution résultante ;
le dépôt de la suspension sur un substrat d'Al ; et
la réalisation d'un traitement thermique sur le substrat d'Al revêtu, les matériaux actifs se liant au substrat d'Al,
un liant polymère et du noir de carbone n'étant pas utilisés dans le traitement du substrat d'Al.
